# EUROPEAN PATENT APPLICATION

(11) **EP 4 843 759 A1**
(43) Date of publication of application: **25.11.2026**
(21) Application number: 26177835.1
(22) Date of filing: 11.05.2026
(51) Int. Cl.: B29C 65/76, B29C 65/48, B29L 31/30

(54) **METHODS OF REMOVING A COMPONENT FROM A BONDED ASSEMBLY**

(30) Priority: 20.05.2025 US 202519213144
(71) Applicant: The Boeing Company, Arlington, VA 22202 (US)
(72) Inventor: SCHAEFER, Joseph D., Arlington, 22202 (US); JUSTUSSON, Brian P., Arlington, 22202 (US)
(74) Representative: Lissandrini, Marco

(57) **Abstract**

Methods of removing a second component from a bonded assembly are presented. A bond between a first component and the second component of the bonded assembly is weakened by applying energy at a plurality of locations along the bond. A force is applied to the second component after applying the energy to the bond to remove the second component from the bonded assembly.

## Description

### BACKGROUND INFORMATION

### 1. Field:

The present disclosure relates generally to manufacturing and more specifically to removing a component from a bonded assembly.

### 2. Background:

Bonded structural assemblies can have significant performance benefits over fastened structures, providing reduced weight designs compared to fastened structures. However, repair and rework of bonded assemblies present challenges. Currently there is not an ability to cleanly, accurately, and reliably remove bondlines within structural assemblies.

Therefore, it would be desirable to have a method and apparatus that takes into account at least some of the issues discussed above, as well as other possible issues.

### SUMMARY

The present disclosure relates to methods of treating a bonded assembly. As used herein, "treating a bonded assembly" includes removing a component from a bonded assembly, and/or repairing the bonded assembly.

An embodiment of the present disclosure provides a method of treating a bonded assembly, comprising weakening a bond between a first component and a second component of the bonded assembly by applying energy at a plurality of locations along the bond such that the second component is removable from the bonded assembly.

Further preferred embodiments are set forth below.

An embodiment of the present disclosure provides a method of removing a second component from a bonded assembly. A bond between a first component and the second component of the bonded assembly is weakened by applying energy at a plurality of locations along the bond. A force is applied to the second component after applying the energy to the bond to remove the second component from the bonded assembly.

In an example of this method embodiment, the step of weakening the bond comprises either breaking at least portions of the bond, or weakening the bond by aging adhesive of the bond.

In accordance with another aspect of the method described in the foregoing paragraph [0007] and/or [0008], the energy has an intensity sufficient to locally break the bond. Additionally or alternatively, the energy is applied repeatedly at each location of the plurality of locations.

In accordance with another aspect of the method described in the foregoing paragraph [0007], [0008] and/or [0009], applying the energy generates an impact area within the bond; additionally, the energy is applied such that each impact area overlaps an adjacent impact area in the bond.

In accordance with another aspect of the method described in the foregoing paragraph [0007], [0008], [0009] and/or [00010], applying the force to the second component comprises pulling the second component away from the first component. Additionally or alternatively, applying the force to the second component may comprise generating an internal applied force within the bonded assembly using pneumatic pressure.

Another embodiment of the present disclosure provides a method of repairing a bonded assembly. Energy is applied at a plurality of locations along a bond between a first component and a second component of the bonded assembly. A force is applied to the second component after applying the energy to the bond to remove the second component from the bonded assembly. A replacement component is bonded to the first component.

In an example of this method embodiment, the energy has an intensity sufficient to locally break the bond. Additionally or alternatively, the energy is applied repeatedly at each location of the plurality of locations.

In accordance with another aspect of the method described in the foregoing paragraph [0012] and/or [0013] , applying the energy generates an impact area within the bond; additionally, the energy is applied such that each impact area overlaps an adjacent impact area in the bond.

In accordance with another aspect of the method described in the foregoing paragraph [0012], [0013] and/or [0014], applying the force to the second component may comprise pulling the second component away from the first component. Additionally or alternatively, applying the force to the second component may comprise generating an internal applied force within the bonded assembly using pneumatic pressure.

In accordance with another aspect of the method described in the foregoing paragraph [0012], [0013], [0014] and/or [0015], the energy is a laser energy.

In accordance with an aspect of the method described in paragraph [0016] above, an ablative material can be applied against the first component, and the laser energy is applied to the ablative material at the plurality of the aforesaid locations. Optionally, a high impedance material can be applied to the first component prior to applying the laser energy to the ablative material.

Another embodiment of the present disclosure provides a method of removing a second component from a bonded assembly. An ablative material is applied to a first component in the bonded assembly. Laser energy is sent into the ablative material at a plurality of locations to generate wave propagation in the bonded assembly to weaken a bond between the first component and the second component of the bonded assembly such that the second component is removable from the bonded assembly.

In an example of this method embodiment, a high impedance material can be applied to the first component prior to applying the laser energy to the ablative material such that waves from sending the laser energy into the ablative material are maintained in the bonded assembly.

Optionally, the laser energy has an intensity sufficient to locally break the bond.

Additionally or alternatively, the laser energy is sent into the ablative material repeatedly at each location of the plurality of locations.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional view of a bonded assembly in accordance with an illustrative embodiment;
**Figure 4** is an illustration of a cross-sectional view of a bonded assembly in accordance with an illustrative embodiment;
**Figure 5** is an illustration of a cross-sectional view of removing a component from a bonded assembly in accordance with an illustrative embodiment;
**Figure 6** is a flowchart of a method of removing a second component from a bonded assembly in accordance with an illustrative embodiment;
**Figure 7** is a flowchart of a method of repairing a bonded assembly in accordance with an illustrative embodiment;
**Figure 8** is a flowchart of a method of removing a second component from a bonded assembly in accordance with an illustrative embodiment;
**Figure 9** is an illustration of an aircraft manufacturing and service method in a form of a block diagram in accordance with an illustrative embodiment; and
**Figure 10** is an illustration of an aircraft in a form of a block diagram in which an illustrative embodiment may be implemented.

### DETAILED DESCRIPTION

The illustrative examples recognize and take into account several considerations. The illustrative examples provide a method to target bondlines. The illustrative examples target bonded interfaces of bonded assemblies. The illustrative examples can be tailored to achieve a desired property reduction of bondlines. The system of the illustrative examples can be used to target a specific bondline strength. In some illustrative examples, the method can reduce the strength of a bondline to a nominal or a negligible level. By reducing the strength of the bondline, rapid repair, replacement, or removal can be facilitated by the illustrative examples. The illustrative examples provide an entirely new way to remove adhesive bondlines and other similar bondlines.

The illustrative examples recognize and take into account that currently, a challenge in reworking or repairing a bonded assembly is how to remove a bonded part from the bonded assembly without inducing undesirable effects in the bonded assembly. Conventionally, removing a component from the bonded assembly can generate undesirable effects to surrounding parts when trying to remove a component from the bondline. The illustrative examples present a method which can remove a component from a bonded assembly without creating undesirable effects in surrounding structures of the bonded assembly.

The illustrative examples present a method which removes bondlines without leaving a chemical residue. The illustrative examples present a method which removes bondlines without altering the surface state chemically.

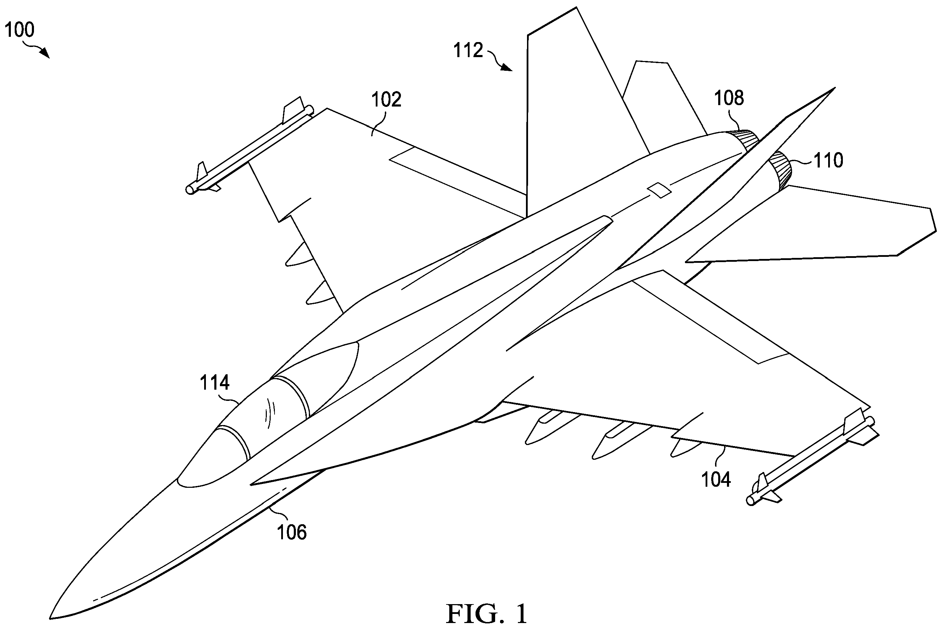

Turning now to **Figure 1****,** an illustration of an aircraft is depicted in accordance with an illustrative embodiment. Aircraft **100** has wing **102** and wing **104** attached to body **106.** Aircraft **100** includes engine **108** and engine **110** attached to tail section **112.** Canopy **114** of aircraft **100** comprises a movable transparency that allows for entry to aircraft **100** and visibility during flight.

Canopy **114** of aircraft **100** is an example of a bonded assembly that can have a component removed using the illustrative examples. In some illustrative examples, the transparency of canopy **114** can be removed and replaced using the illustrative examples.

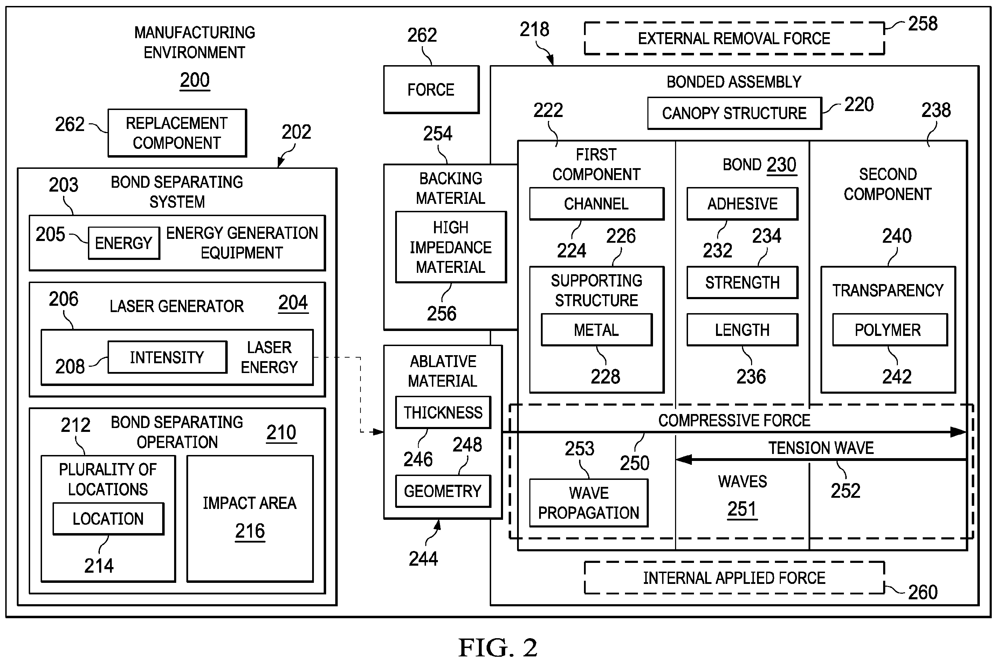

Turning now to **Figure 2****,** an illustration of a block diagram of a manufacturing environment is depicted in accordance with an illustrative embodiment. Bond separating system **202** and bond separating operation **210** can be used to separate a component of aircraft **100** from a bonded assembly of aircraft **100** in **Figure 1****.**

Manufacturing environment **200** includes bond separating system **202** configured to remove second component **238** from first component **222** in bonded assembly **218.** Bond separating system **202** of the illustrative examples allows for bonded assembly **218** with transparency **240** or any other desirable bonded component or system to be disassembled into constituent components. The illustrative examples are applicable to repair, as well as tear-down, replacement, or removal. Bond separating system **202** allows for weakening or breaking bond **230** without undesirably affecting components of bonded assembly **218.**

Bond separating system **202** comprises energy generation equipment **203** configured to provide energy **205.** Energy generation equipment **203** provides energy **205** to degrade bond **230.** Energy generation equipment **203** can take any desirable form. In some illustrative examples, energy generation equipment **203** takes the form of laser generator **204.** In these illustrative examples, energy **205** takes the form of laser energy **206.** Energy **205** can take any desirable directed energy means, such as at least one of radiation energy, thermal energy, energy waves, mechanical energy, or vibrations.

Bond separating system **202** performs bond separating operation **210** to degrade bond **230** in impact area **216.** Impact area **216** is a region that receives energy **205.** Impact area **216** can also be referred to as an effective zone or an influence zone. Bond separating operation **210** comprises application of energy **205** to plurality of locations **212** by bond separating system **202.**

Energy generation equipment **203** is a direct energy source. In some illustrative examples, energy generation equipment **203** comprises laser generator **204.** In some illustrative examples, laser generator **204** comprises a laser with sufficient pulse strength to ablate a surface material which drives solid waves, waves **251,** into the assembled materials of bonded assembly **218.** The internal wave mechanics travel within the multiple combined materials of bonded assembly **218** as incoming, reflected, and transmitted waves.

In some illustrative examples, when energy **205** comprises laser energy **206,** ablative material **244** can be positioned on bonded assembly **218.** Ablative material **244** is a surface material. Ablative material **244** can be selected such that the impedance of ablative material **244** matches the host surface material, such as material of first component **222,** in a manner that allows for a desired amount of energy transmission. For ablative material **244,** material type, conformity to the target surface of first component **222,** geometry **248,** and properties such as strength, stiffness, and density are key considerations. Material properties including density, strength, and stiffness can be selected to establish appropriate impedance match. Thickness **246** of ablative material **244** is sufficient to allow for desired duration of application of energy **205** without undesirable effects to first component **222.** Ablative material **244** is positioned on a surface of first component **222** to receive energy **205** from energy generation equipment **203.** Ablative material **244** is configured to provide desired wave mechanics/solid wave mechanics.

Application of energy **205** to bonded assembly **218** is controlled to generate waves **251** in bonded assembly **218.** Wave propagation **253** in bonded assembly **218** causes degradation to bond **230** in impact area **216.** In some illustrative examples, energy **205** creates compressive force **250** in bonded assembly **218.** In some illustrative examples, tension wave **252** is generated in bonded assembly **218** in response to compressive force **250.** In some illustrative examples, tension wave **252** locally reduces strength **234** of bond **230** in impact area **216.**

In some illustrative examples, backing material **254** is positioned on bonded assembly **218** to maintain wave propagation **253** in bonded assembly **218.** Backing material **254** is selected such that the impedance of backing material **254** is significantly higher than a host assembly material, such as the material of first component **222,** in a manner that allows for a desired amount of energy transmission. In some illustrative examples, backing material **254** is configured to increase the amount of energy transmission. Backing material **254** can be referred to as a reflection material. In some illustrative examples, backing material **254** can be referred to as high impedance material **256.**

Backing material **254** is high impedance so that the waves hitting backing material **254** are reflected back into the bondline as high amplitude tension waves. Backing material **254** can be used to limit/prevent wave transmission. In some illustrative examples, backing material **254** can be optional. In some illustrative examples, backing material **254** can be a solid block. In some illustrative examples, backing material **254** can be a designed feature or tool. In some illustrative examples, backing material **254** has a combination of high density/impedance materials tailored to achieve a specific level of wave reflection. In some illustrative examples, backing material **254** comprises a foam, such as a syntactic foam, a structure inclusive of air pockets, or any other material or design.

In some illustrative examples, backing material **254** is used to enable wave "ring up" inside impact area **216.** A material type of backing material **254** can be selected to provide desired material properties including density, strength, and stiffness to establish a desired impedance mismatch to achieve sufficient solid wave reflection in wave propagation **253.**

Prior to performing bond separating operation **210,** a calibration process is performed to establish fluence expressed as energy per unit area (J/cm²) for energy **205** to break nominal bond strength, strength **234,** for bond **230** using waves **251.** In some illustrative examples, calibration includes considerations of material influence of bonded assembly **218** on signal/wave attenuation. In some illustrative examples, bonded assembly **218** comprises canopy structure **220** in which first component **222** comprises supporting structure **226** formed of metal **228** and transparency **240** formed of polymer **242.** In some illustrative examples, calibration further comprises signal analysis, potentially using at least one of acoustic emission or machine learning.

In some illustrative examples, calibration includes analysis of at least one of a single material layer such as metal, a multi-layer material such as a composite, hybrid materials such as metal and composite, and structural assemblies such as adhesively bonded joints or co-cured joints. In some illustrative examples, the calibration includes consideration of appropriate ablative material **244** and backing material **254** to appropriately shape waves **251.**

Determining intensity **208** of energy **205** to consistently and accurately break bond **230** utilizes the calibration process. The calibration process may be informed by mechanical testing such as at least one of static or fatigue tests of simple bonded joints such as single lap, double strap, or double lap joints to establish strength **234** or stiffness or other attributes of bond **230.** For the calibration process, iteratively impacting test bondlines with the selected energy source can then be performed. The joints are subsequently tested mechanically (static, fatigue, residual strength) to identify the settings for a desired method used to apply the directed energy, energy **205** to weaken or break bond **230** without undesirably affecting surrounding components of bonded assembly **218.**

In some illustrative examples, intensity **208** of energy **205** can be informed using analytical methods, such as computational analysis, to predict the strength, stiffness, and other material and interface property reductions in bond **230** to achieve effective removal. In some illustrative examples, the design of where and how to place bond separating system **202** relative to bonded assembly **218** can be evaluated analytically (computational, theoretical) to determine effective placement of ablative material **244** and backing material **254.**

The material selection, geometry **248,** thickness **246,** other properties, and placement of ablative material **244** may be determined via a system design process which includes experimental trial, and also via analytical, such as computational predictions.

In some illustrative examples, the calibration process may be used to strategically tailor the weakened location within bond **230** to achieve a specific outcome. In some illustrative examples, the weakened location can be within adhesive **232** or otherwise within the thickness of bond **230** itself. In some illustrative examples, the weakened location can be at the interface between bond **230** and one of the components, first component **222** or second component **238** of bonded assembly **218.** In some illustrative examples, the weakened location can be at the interface between adhesive **232** and one of the components of bonded assembly.

A desired process of repair, rework, or other desired process can impact where the preferred degradation occurs in bonded assembly. In some illustrative examples, the desired method is a tear-down, and application of laser energy **206** is calibrated to achieve rapid removal of second component **238,** such as transparency **240,** from bonded assembly **218** such that the degradation location is within bond **230,** such as adhesive **232.**

For repair or replacement, application of laser energy **206** can be calibrated to achieve weakening or breaking between adhesive **232** and at least one component of bonded assembly **218** such that adhesive **232** is able to be easily removed along with second component **238** such as transparency **240.** In some illustrative examples, bond separating operation **210** is configured such that adhesive **232** remains stuck to transparency **240,** adhesive **232** is broken, and the interface between adhesive **232** is broken between both bond **230** and second component **238** and bond **230** and first component **222.**

Bond separating operation **210** may be calibrated based on the type of bondline, such as cocured, cobonded, postbonded, or secondary bonded, and associated properties such as strength, stiffness, or toughness. In bond separating operation **210,** energy **205** can be applied in one single shot or multiple shots based on the geometry and configuration of bonded assembly. In bond separating operation **210,** energy **205** can be applied in one single shot or multiple shots based on a desire to not have undesirable effects on the underlying structure while weakening or breaking bond **230** for removal of second component **238.**

A method of removing second component **238** from bonded assembly **218,** such as bond separating operation **210,** comprises weakening bond **230** between first component **222** and second component **238** of bonded assembly **218** by applying energy **205** at plurality of locations **212** along bond **230.** In some illustrative examples, the method comprises applying a force to second component **238** after applying energy **205** to bond **230** to remove second component **238** from bonded assembly **218.** In some illustrative examples, the force comprises one of external removal force **258** or internal applied force **260.**

In some illustrative examples, external removal force **258** comprises a pulling force. In some illustrative examples, applying the force to second component **238** comprises pulling second component **238** away from first component **222.** In some illustrative examples, external removal force **258** comprises an application of a force to at least one of first component **222** or second component **238** which initiates or creates a displacement in a desired magnitude and vector between first component **222** and second component **238.** External removal force **258** comprises any desirable type of force such as mechanical force, pneumatic force, or any other desirable form. Internal applied force **260** comprises any desirable type of force, such as mechanical force, pneumatic force, or any other desirable form. In some illustrative examples, applying the force to second component **238** comprises generating internal applied force **260** within bonded assembly **218** using pneumatic pressure.

In some illustrative examples, weakening bond **230** comprises breaking at least portions of bond **230.** In some illustrative examples, weakening bond **230** comprises locally reducing strength **234** of bond **230.** In some illustrative examples, weakening bond **230** comprises aging adhesive **232** of bond **230.**

In some illustrative examples, plurality of locations **212** are positioned across length **236** of bond **230.** In some illustrative examples, plurality of locations **212** are positioned such that each application of energy **205** overlaps a previous application of energy **205.** In some illustrative examples, plurality of locations **212** are positioned such that each application of energy **205** is adjacent to a previous application of energy **205** without overlapping.

In some illustrative examples, applying energy **205** generates impact area **216** within bond **230.** Impact area **216** can have a different size depending on the type of energy **205.** Impact area **216** can have a different size depending on the design of energy generation equipment **203.** In some illustrative examples, applying energy **205** comprises applying energy **205** such that each impact area overlaps an adjacent impact area in bond **230.**

In some illustrative examples, applying energy **205** comprises applying energy **205** having intensity **208** sufficient to locally break bond **230.** In these illustrative examples, intensity **208** of energy **205** is calibrated to break bond **230** in impact area **216** with a single application. In these illustrative examples, applying energy **205** at location **214** breaks bond **230** at location **214.**

In some other illustrative examples, applying energy **205** comprises applying energy **205** repeatedly at each location **214** of plurality of locations **212.** In some illustrative examples, energy **205** is sufficient to reduce strength **234** without breaking bond **230.**

In some illustrative examples, a method of repairing bonded assembly **218** comprises applying energy **205** at plurality of locations **212** along bond **230** between first component **222** and second component **238** of bonded assembly **218.** In some illustrative examples, the method comprises applying a force to at least one of first component **222** or second component **238** after applying energy **205** to bond **230** to remove second component **238** from bonded assembly **218.** In some illustrative examples, the method bonds replacement component **262** to first component **222.** In some illustrative examples, additional cleaning and treatment steps are performed to prepare first component **222** and replacement component **262** for bonding.

In some illustrative examples, applying energy **205** generates an impact area **216** within bond **230,** and applying energy **205** comprises applying energy **205** such that each impact area overlaps an adjacent impact area in bond **230.** In some illustrative examples, applying energy **205** generates an impact area **216** within bond **230,** and applying energy **205** comprises applying energy **205** such that each impact area is near but not overlapping each adjacent impact area. In these illustrative examples, plurality of locations **212** are positioned to allow for significant weakening of bond **230** such that second component **238** can be removed.

In some illustrative examples, energy **205** is laser energy **206.** In some illustrative examples, the method comprises applying ablative material **244** against first component **222.** In some illustrative examples, ablative material **244** can be directly bonded or affixed to bonded assembly **218.** In some illustrative examples, ablative material **244** can be held in place via pressure against bonded assembly **218.** In some illustrative examples, bond separating system **202** can apply pressure against ablative material **244** to maintain ablative material **244** against bonded assembly **218.** In some illustrative examples, bond separating system **202** can carry and dispense ablative material **244.** In some illustrative examples, applying the laser energy at the plurality of locations along the bond comprise applying the laser energy to the ablative material at the plurality of locations.

In some illustrative examples, the method comprises applying high impedance material **256** to first component **222** prior to applying laser energy **206** to ablative material **244.** In some illustrative examples, the method comprises applying high impedance material **256** to first component **222** prior to applying laser energy **206** to ablative material **244** such that waves **251** from sending laser energy **206** into ablative material **244** are maintained in bonded assembly **218.** In some illustrative examples, bonded assembly **218** comprises additional components. In some illustrative examples, high impedance material **256** is applied to additional components of bonded assembly **218.**

In some illustrative examples, a method of removing second component **238** from bonded assembly **218** comprises applying ablative material **244** to first component **222** in bonded assembly **218.** In some illustrative examples, the method comprises sending laser energy **206** into ablative material **244** at plurality of locations **212** to generate wave propagation **253** in bonded assembly **218** to weaken bond **230** between first component **222** and second component **238** of bonded assembly **218** such that second component **238** is removable from bonded assembly **218.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, energy generation equipment **203** can be one of a thermal energy generator, or a radiation energy source. As another example, bonded assembly **218** can comprise more components than first component **222** and second component **238.**

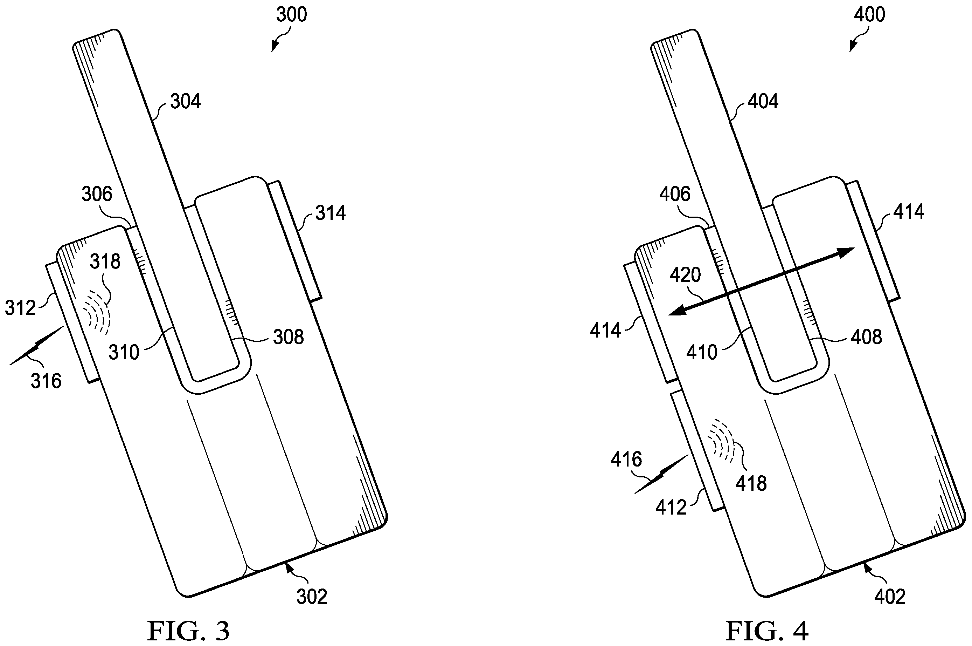

Turning now to **Figure 3****,** an illustration of a cross-sectional view of a bonded assembly is depicted in accordance with an illustrative embodiment. In some illustrative examples, bonded assembly **300** can be a portion of aircraft **100** of **Figure 1****.** Bonded assembly **300** is a physical implementation of bonded assembly **218** of **Figure 2****.**

Bonded assembly **300** comprises first component **302** and second component **304.** In this illustrative example, first component **302** is a supporting structure. In some illustrative examples, second component **304** is a transparency. In this illustrative example, second component **304** is positioned in cavity **306** of first component **302.** Second component **304** is joined to first component **302** by bond **308.** In this illustrative example, bond **308** comprises adhesive **310.**

Energy is directed towards first component **302** to generate waves in first component **302.** In this illustrative example, the energy takes the form of laser energy **316.**

Ablative material **312** and backing material **314** are present on first component **302.** In this illustrative example, backing material **314** is on an opposite surface of first component **302** from ablative material **312.** In this illustrative example, backing material **314** is positioned on one surface of first component **302.**

Laser energy **316** is directed to ablative material **312.** Backing material **314** at least partially retains waves generated from laser energy **316** within bonded assembly **300.** In some illustrative examples, backing material **314** comprises a high impedance material. In some non-depicted examples, backing material **314** is not present.

Laser energy **316** is provided by laser generator (not depicted) and generates waves **318** in bonded assembly **300.** Application of laser energy **316** weakens or breaks a local portion of bond **308.** The impact area is a localized portion acted upon by waves **318** generated by laser energy **316.** In some illustrative examples, laser energy **316** is applied repeatedly at a location to weaken or break bond **308** of bonded assembly **300.** In some illustrative examples, laser energy **316** is applied to a plurality of locations such that impact areas overlap to weaken or break bond **308** of bonded assembly **300** over an area.

Turning now to **Figure 4****,** an illustration of a cross-sectional view of a bonded assembly is depicted in accordance with an illustrative embodiment. In some illustrative examples, bonded assembly **400** can be a portion of aircraft **100** of **Figure 1****.** Bonded assembly **400** is a physical implementation of bonded assembly **218** of **Figure 2****.** In some illustrative examples, bonded assembly **300** and bonded assembly **400** are the same structure.

Bonded assembly **400** comprises first component **402** and second component **404.** In this illustrative example, first component **402** is a supporting structure. In some illustrative examples, second component **404** is a transparency. In this illustrative example, second component **404** is positioned in cavity **406** of first component **402.** Second component **404** is joined to first component **402** by bond **408.** In this illustrative example, bond **408** comprises adhesive **410.**

Energy is directed towards first component **402** to generate waves in first component **402.** In this illustrative example, the energy takes the form of laser energy **416.**

Ablative material **412** and backing material **414** are present on first component **402.** In this illustrative example, backing material **414** is present on opposite surfaces of first component **402** through the thickness of first component **402.** In this illustrative example, ablative material **412** is positioned adjacent to backing material **414** on a same surface of first component **402.** In this illustrative example, backing material **414** is positioned on more than one surface of first component **402** to retain waves **418** in bonded assembly **400.**

Laser energy **416** is directed to ablative material **412.** Backing material **414** at least partially retains waves generated from laser energy **416** within bonded assembly **400.** In some illustrative examples, backing material **414** comprises a high impedance material. Ring-up zone **420** is present between portions of backing material **414.** Waves will ricochet in ring-up zone **420** to increase degradation to bond **408** in ring-up zone **420.**

Laser energy **416** is provided by laser generator (not depicted) and generates waves **418** in bonded assembly **400.** Application of laser energy **416** weakens or breaks a local portion of bond **408.** The impact area is a localized portion acted upon by waves **418** generated by laser energy **416.** In some illustrative examples, laser energy **416** is applied repeatedly at a location to weaken or break bond **408** of bonded assembly **400.** In some illustrative examples, laser energy **416** is applied to a plurality of locations such that impact areas overlap to weaken or break bond **408** of bonded assembly **400** over an area.

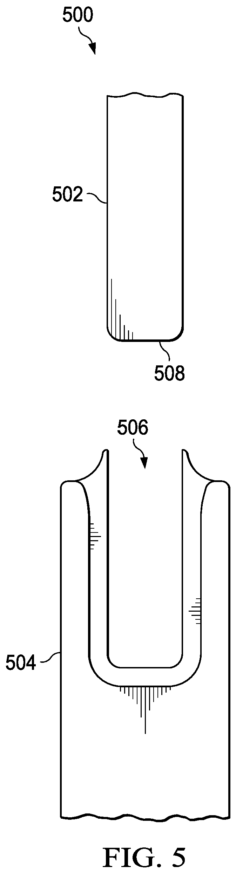

Turning now to **Figure 5****,** an illustration of a cross-sectional view of removing a component from a bonded assembly is depicted in accordance with an illustrative embodiment. In some illustrative examples, bonded assembly **500** can be a portion of aircraft **100 of** **Figure 1****.** Bonded assembly **500** is a physical implementation of bonded assembly **218** of **Figure 2****.** In some illustrative examples, bonded assembly **500** can be the same as bonded assembly **300** of **Figure 3** after an application of energy. In some illustrative examples, bonded assembly **500** can be the same as bonded assembly **400** of **Figure 4** after an application of energy.

In **Figure 5****,** second component **502** is being removed from first component **504** of bonded assembly **500.** In this illustrative example, energy has been directed to a bond previously connecting first component **504** and second component **502** to weaken the bond. In **Figure 5****,** second component **502** is being removed from channel **506** of first component **504.** In this illustrative example, second component **502** takes the form of transparency **508.**

In some illustrative examples, to remove second component **502** from first component **504,** an external force can be applied to second component **502.** In some illustrative examples, to remove second component **502** from first component **504,** an internal force can be applied in bonded assembly **500.** In some illustrative examples, the applied force can be a pulling force. In some illustrative examples, the applied force is at least one of mechanical or pneumatic. Application of energy to the bond previously connecting first component **504** and second component **502** reduces the removal force to be used to remove second component **502** from first component **504.** Application of energy to the bond either breaks the bond or reduces the strength of the bond, thus reducing the removal force.

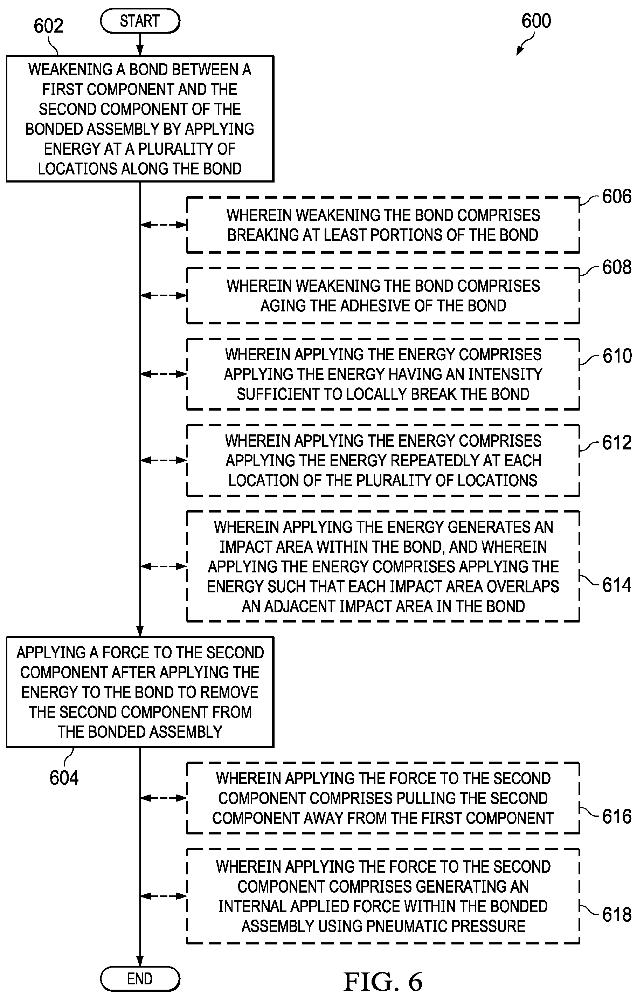

Turning now to **Figure 6****,** a flowchart of a method of removing a second component from a bonded assembly is depicted in accordance with an illustrative embodiment. Method **600** can be used to remove a component of aircraft **100** of **Figure 1****.** Method **600** can be used to remove second component **238** from bonded assembly **218.** Method **600** can be used to remove second component **304** from bonded assembly **300** of **Figure 3****.** Method **600** can be used to remove second component **404** from bonded assembly **400** of **Figure 4****.** Method **600** can be used to remove second component **502** from bonded assembly **500** of **Figure 5****.**

Method **600** weakens a bond between a first component and the second component of the bonded assembly by applying energy at a plurality of locations along the bond (operation **602**). Method **600** applies a force to the second component after applying the energy to the bond to remove the second component from the bonded assembly (operation **604**). Afterwards, method **600** terminates.

In some illustrative examples, weakening the bond comprises breaking at least portions of the bond (operation **606**)**.** In some illustrative examples, the intensity of the energy is selected to fully break the portion of the bond subjected to the energy.

In some illustrative examples, weakening the bond comprises aging the adhesive of the bond (operation **608**). In some illustrative examples, the energy applied only partially weakens the bond.

In some illustrative examples, applying the energy comprises applying the energy having an intensity sufficient to locally break the bond (operation **610**). In some illustrative examples, applying the energy comprises applying the energy repeatedly at each location of the plurality of locations (operation **612**).

In some illustrative examples, applying the energy generates an impact area within the bond, and wherein applying the energy comprises applying the energy such that each impact area overlaps an adjacent impact area in the bond (operation **614**)**.** By overlapping impact areas, a full length of the bond can be weakened by the energy.

In some illustrative examples, applying the force to the second component comprises pulling the second component away from the first component (operation **616**)**.** In some illustrative examples, applying the force to the second component comprises generating an internal applied force within the bonded assembly using pneumatic pressure (operation **618**)**.**

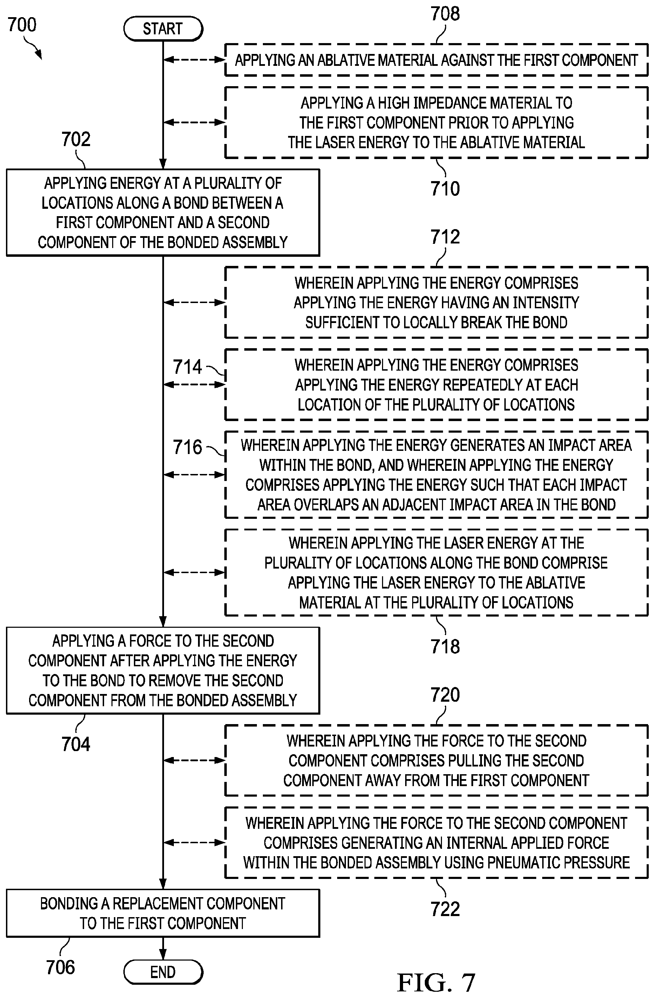

Turning now to **Figure 7****,** a flowchart of a method of repairing a bonded assembly is depicted in accordance with an illustrative embodiment. Method **700** can be used to repair an assembly of aircraft **100** of **Figure 1****.** Method **700** can be used to remove second component **238** from bonded assembly **218** to repair bonded assembly **218** of **Figure 2****.** Method **700** can be used to repair bonded assembly **300** of **Figure 3****.** Method **600** can be used to repair bonded assembly **400** of **Figure 4****.** Method **600** can be used to remove second component **502** from bonded assembly **500** to repair the bonded assembly of **Figure 5****.**

Method **700** applies energy at a plurality of locations along a bond between a first component and a second component of the bonded assembly (operation **702**). Method **700** applies a force to the second component after applying the energy to the bond to remove the second component from the bonded assembly (operation **704**). Method **700** bonds a replacement component to the first component (operation **706**). Afterwards, method **700** terminates.

In some illustrative examples, method **700** applies an ablative material against the first component (operation **708**). In some illustrative examples, method **700** applies a high impedance material to the first component prior to applying the laser energy to the ablative material (operation **710**).

In some illustrative examples, applying the energy comprises applying the energy having an intensity sufficient to locally break the bond (operation **712**). In some illustrative examples, applying the energy comprises applying the energy repeatedly at each location of the plurality of locations (operation **714**). In some illustrative examples, applying the energy generates an impact area within the bond, and wherein applying the energy comprises applying the energy such that each impact area overlaps an adjacent impact area in the bond (operation **716**).

In some illustrative examples, the energy is laser energy. In some illustrative examples, applying the laser energy at the plurality of locations along the bond comprises applying the laser energy to the ablative material at the plurality of locations (operation **718**).

In some illustrative examples, applying the force to the second component comprises pulling the second component away from the first component (operation **720**). In some illustrative examples, applying the force to the second component comprises generating an internal applied force within the bonded assembly. In some illustrative examples, applying the force to the second component comprises generating an internal applied force within the bonded assembly using pneumatic pressure (operation **722**).

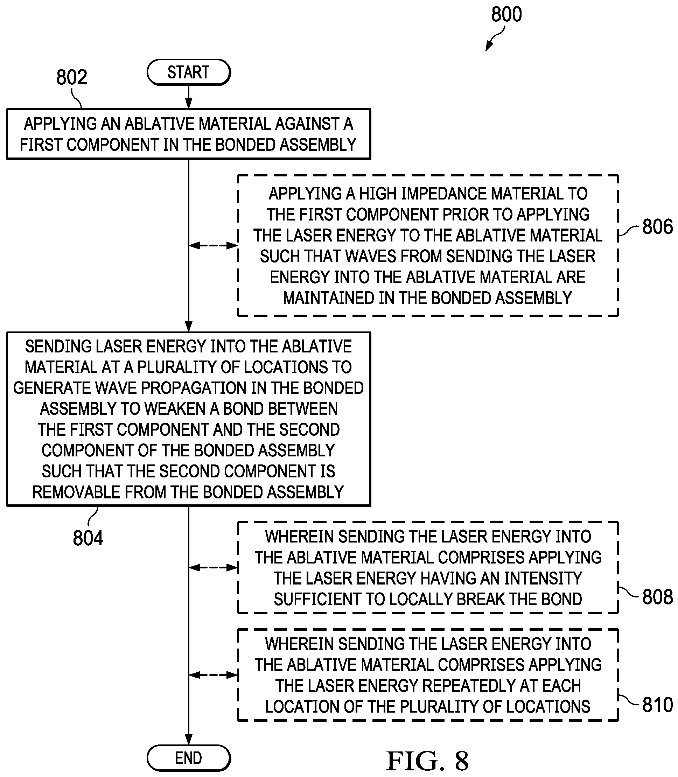

Turning now to **Figure 8****,** a flowchart of a method of removing a second component from a bonded assembly is depicted in accordance with an illustrative embodiment. Method **800** can be used to remove a component of aircraft **100** of **Figure 1****.** Method **800** can be used to remove second component **238** from bonded assembly **218.** Method **800** can be used to remove second component **304** from bonded assembly **300** of **Figure 3****.** Method **800** can be used to remove second component **404** from bonded assembly **400** of **Figure 4****.** Method **800** can be used to remove second component **502** from bonded assembly **500** of **Figure 5****.**

Method **800** applies an ablative material against a first component in the bonded assembly (operation **802**). Method **800** sends laser energy into the ablative material at a plurality of locations to generate wave propagation in the bonded assembly to weaken a bond between the first component and the second component of the bonded assembly such that the second component is removable from the bonded assembly (operation **804**). Afterwards, method **800** terminates.

In some illustrative examples, method **800** applies a high impedance material to the first component prior to applying the laser energy to the ablative material such that waves from sending the laser energy into the ablative material are maintained in the bonded assembly (operation **806**). In some illustrative examples, sending the laser energy into the ablative material comprises applying the laser energy having an intensity sufficient to locally break the bond (operation **808**). In some illustrative examples, sending the laser energy into the ablative material comprises applying the laser energy repeatedly at each location of the plurality of locations (operation **810**).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **606** through operation **618** may be optional. For example, operation **708** through operation **722** may be optional. For example, operation **806** through operation **810** may be optional.

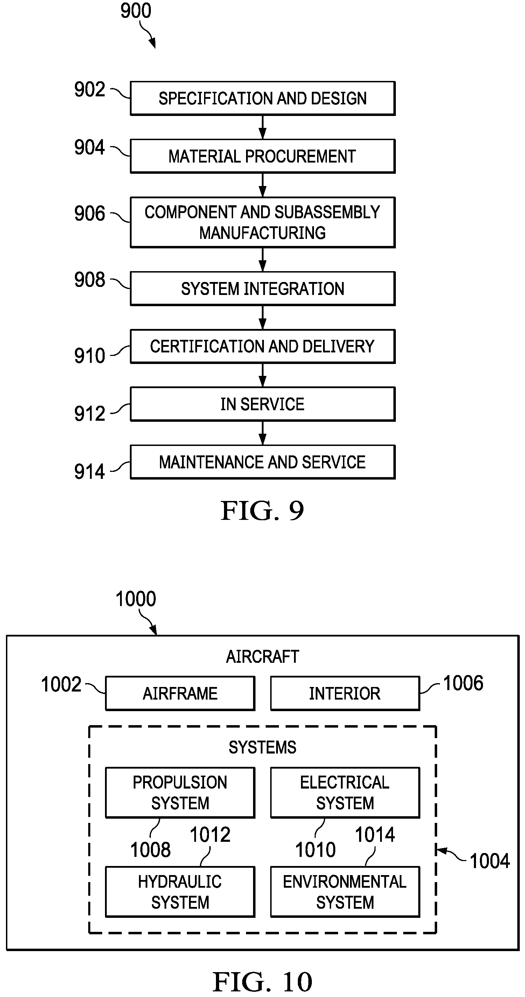

Illustrative embodiments of the present disclosure may be described in the context of aircraft manufacturing and service method **900** as shown in **Figure 9** and aircraft **1000** as shown in **Figure 10****.** Turning first to **Figure 9****,** an illustration of an aircraft manufacturing and service method in a form of a block diagram is depicted in accordance with an illustrative embodiment. During pre-production, aircraft manufacturing and service method **900** may include specification and design **902** of aircraft **1000** in **Figure 10** and material procurement **904.**

During production, component and subassembly manufacturing **906** and system integration **908** of aircraft **1000** takes place. Thereafter, aircraft **1000** may go through certification and delivery **910** in order to be placed in service **912.** While in service **912** by a customer, aircraft **1000** is scheduled for routine maintenance and service **914,** which may include modification, reconfiguration, refurbishment, or other maintenance and service.

Each of the processes of aircraft manufacturing and service method **900** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 10****,** an illustration of an aircraft in a form of a block diagram is depicted in which an illustrative embodiment may be implemented. In this example, aircraft **1000** is produced by aircraft manufacturing and service method **900** of **Figure 9** and may include airframe **1002** with plurality of systems **1004** and interior **1006.** Examples of systems **1004** include one or more of propulsion system **1008,** electrical system **1010,** hydraulic system **1012,** and environmental system **1014.** Any number of other systems may be included.

Apparatuses and methods embodied herein may be employed during at least one of the stages of aircraft manufacturing and service method **900.** One or more illustrative embodiments may be manufactured or used during at least one of component and subassembly manufacturing **906,** system integration **908,** in service **912,** or maintenance and service **914** of **Figure 9****.**

The illustrative examples provide a rapid method which enables removal of a transparency canopy or other bonded systems while limiting impact to surrounding support structure. The illustrative examples provide highly customizable and tailorable methods that can be applied to a wide range of applications, programs, assemblies. The illustrative examples provide a low recurring cost compared to current approaches. The illustrative examples provide a comparatively clean process which reduces foreign object debris. The illustrative examples provide a consistent, accurate, and efficient process which can be calibrated to specific assemblies.

The illustrative examples provide an entirely new way to remove adhesive (and similar) bondlines. The illustrative examples provide the ability to remove canopies and/or separate bonded materials using a clean, accurate, and efficient process. The illustrative examples provide the ability to stand-up the capability in the supply and/or customer base. The illustrative examples provide ability to implement manual, automated, and/or hybrid processes to use the capability in a scalable manner across a variety of relevant structural length scales.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

The scope of protection is determined by the appended claims. Nevertheless, implementations according to the following clauses are also part of the present disclosure:
Clause 1. A method (600) of removing a second component (238, 304, 404, 502) from a bonded assembly (218, 300, 400, 500) comprising:
   weakening (602) a bond (230, 308, 408) between a first component (222, 302, 402, 504) and the second component (238, 304, 404, 502) of the bonded assembly (218, 300, 400, 500) by applying energy (205) at a plurality of locations (212) along the bond (230, 308, 408); and
   applying (604) a force (262) to the second component (238, 304, 404, 502) after applying the energy (205) to the bond (230, 308, 408) to remove the second component (238, 304, 404, 502) from the bonded assembly (218, 300, 400, 500).
Clause 2. The method (600) of Clause 1, wherein (606) weakening the bond (230, 308, 408) comprises breaking at least portions of the bond (230, 308, 408).
Clause 3. The method (600) of Clause 1, wherein (608) weakening the bond (230, 308, 408) comprises aging adhesive (232, 310, 410) of the bond (230, 308, 408).
Clause 4. The method (600) of any one of Clauses 1 to 3, wherein (610) applying the energy (205) comprises applying the energy (205) having an intensity (208) sufficient to locally break the bond (230, 308, 408) .
Clause 5. The method (600) of any one of Clauses 1 to 4, wherein (612) applying the energy (205) comprises applying the energy (205) repeatedly at each location (214) of the plurality of locations (212).
Clause 6. The method (600) of any one of Clauses 1 to 5, wherein (614) applying the energy (205) generates an impact area (216) within the bond (230, 308, 408), and wherein applying the energy (205) comprises applying the energy (205) such that each impact area (216) overlaps an adjacent impact area (216) in the bond (230, 308, 408).
Clause 7. The method (600) of any one of Clauses 1 to 6, wherein (616) applying the force (262) to the second component (238, 304, 404, 502) comprises pulling the second component (238, 304, 404, 502) away from the first component (222, 302, 402, 504).
Clause 8. The method (600) of any one of Clauses 1 to 7, wherein (618) applying the force (262) to the second component (238, 304, 404, 502) comprises generating an internal applied force (260) within the bonded assembly (218, 300, 400, 500) using pneumatic pressure.
Clause 9. A method (700) of repairing a bonded assembly (218, 300, 400, 500) comprising:
   applying (702) energy (205) at a plurality of locations (212) along a bond (230, 308, 408) between a first component (222, 302, 402, 504) and a second component (238, 304, 404, 502) of the bonded assembly (218, 300, 400, 500);
   applying (704) a force (262) to the second component (238, 304, 404, 502) after applying the energy (205) to the bond (230, 308, 408) to remove the second component (238, 304, 404, 502) from the bonded assembly (218, 300, 400, 500); and
   bonding (706) a replacement component (262) to the first component (222, 302, 402, 504).
Clause 10. The method (700) of Clause 9, wherein (712) applying the energy (205) comprises applying the energy (205) having an intensity (208) sufficient to locally break the bond (230, 308, 408).
Clause 11. The method (700) of Clause 9 or 10, wherein (714) applying the energy (205) comprises applying the energy (205) repeatedly at each location (214) of the plurality of locations (212).
Clause 12. The method (700) of any one of Clauses 9 to 11, wherein (716) applying the energy (205) generates an impact area (216) within the bond (230, 308, 408), and wherein applying the energy (205) comprises applying the energy (205) such that each impact area (216) overlaps an adjacent impact area (216) in the bond (230, 308, 408).
Clause 13. The method (700) of any one of Clauses 9 to 12, wherein (720) applying the force (262) to the second component (238, 304, 404, 502) comprises pulling the second component (238, 304, 404, 502) away from the first component (222, 302, 402, 504).
Clause 14. The method (700) of any one of Clauses 9 to 13, wherein (722) applying the force (262) to the second component (238, 304, 404, 502) comprises generating an internal applied force (260) within the bonded assembly (218, 300, 400, 500) using pneumatic pressure.
Clause 15. The method (700) of any one of Clauses 9 to 14, wherein the energy (205) is laser energy (206, 316, 416).
Clause 16. The method (700) of Clause 15 further comprising:
   applying (708) ablative material (244, 312, 412) against the first component (222, 302, 402, 504); and
   wherein (718) applying the laser energy (206, 316, 416) at the plurality of locations (212) along the bond (230, 308, 408) comprise applying the laser energy (206, 316, 416) to the ablative material (244, 312, 412) at the plurality of locations (212).
Clause 17. The method (700) of Clause 16 further comprising:
   applying (710) a high impedance material (256) to the first component (222, 302, 402, 504) prior to applying the laser energy (206, 316, 416) to the ablative material (244, 312, 412).
Clause 18. A method (800) of removing a second component (238, 304, 404, 502) from a bonded assembly (218, 300, 400, 500) comprising:
   applying (802) ablative material (244, 312, 412) against a first component (222, 302, 402, 504) in the bonded assembly (218, 300, 400, 500); and
   sending (804) laser energy (206, 316, 416) into the ablative material (244, 312, 412) at a plurality of locations (212) to generate wave propagation (253) in the bonded assembly (218, 300, 400, 500) to weaken a bond (230, 308, 408) between the first component (222, 302, 402, 504) and the second component (238, 304, 404, 502) of the bonded assembly (218, 300, 400, 500) such that second component (238, 304, 404, 502) is removable from the bonded assembly (218, 300, 400, 500).
Clause 19. The method (800) of Clause 18 further comprising:
   applying (806) a high impedance material (256) to the first component (222, 302, 402, 504) prior to applying the laser energy (206, 316, 416) to the ablative material (244, 312, 412) such that waves (251, 318, 418) from sending the laser energy (206, 316, 416) into the ablative material (244, 312, 412) are maintained in the bonded assembly (218, 300, 400, 500).
Clause 20. The method (800) of Clause 18 or 19, wherein (808) sending the laser energy (206, 316, 416) into the ablative material (244, 312, 412) comprises applying the laser energy (206, 316, 416) having an intensity (208) sufficient to locally break the bond (230, 308, 408).
Clause 21. The method (800) of any one of Clauses 18 to 20, wherein (810) sending the laser energy (206, 316, 416) into the ablative material (244, 312, 412) comprises applying the laser energy (206, 316, 416) repeatedly at each location (214) of the plurality of locations (212).

## Claims

1. A method (600, 700, 800) of treating a bonded assembly (238, 304, 404, 502), comprising:
weakening (602) a bond (230, 308, 408) between a first component (222, 302, 402, 504) and a second component (238, 304, 404, 502) of the bonded assembly (218, 300, 400, 500) by applying energy (205) at a plurality of locations (212) along the bond (230, 308, 408) such that the second component (238, 304, 404, 502) is removable from the bonded assembly (218, 300, 400, 500).

2. The method (600) of claim 1, comprising:
applying (604) a force (262) to the second component (238, 304, 404, 502) after applying the energy (205) to the bond (230, 308, 408) to remove the second component (238, 304, 404, 502) from the bonded assembly (218, 300, 400, 500).

3. The method (600) of claim 1 or 2, wherein (608) weakening the bond (230, 308, 408) comprises aging adhesive (232, 310, 410) of the bond (230, 308, 408).

4. The method (600) of claim 1 or 2, wherein (610) applying the energy (205) comprises applying the energy (205) having an intensity (208) sufficient to locally break the bond (230, 308, 408).

5. The method (600) of any one of claims 1 to 4, wherein (612) applying the energy (205) comprises applying the energy (205) repeatedly at each location (214) of the plurality of locations (212).

6. The method (600) of any one of claim 1 to 5, wherein (614) applying the energy (205) generates an impact area (216) within the bond (230, 308, 408), and wherein applying the energy (205) comprises applying the energy (205) such that each impact area (216) overlaps an adjacent impact area (216) in the bond (230, 308, 408).

7. The method (600) of claim 2, wherein (616) applying the force (262) to the second component (238, 304, 404, 502) comprises pulling the second component (238, 304, 404, 502) away from the first component (222, 302, 402, 504).

8. The method (600) of claim 2 or 7, wherein (618) applying the force (262) to the second component (238, 304, 404, 502) comprises generating an internal applied force (260) within the bonded assembly (218, 300, 400, 500) using pneumatic pressure.

9. The method (700) of any one of claims 3 to 8 further comprising repairing the bonded assembly (218, 300, 400, 500), wherein the step of repairing includes
applying (704) a force (262) to the second component (238, 304, 404, 502) after applying the energy (205) to the bond (230, 308, 408) to remove the second component (238, 304, 404, 502) from the bonded assembly (218, 300, 400, 500); and
bonding (706) a replacement component (262) to the first component (222, 302, 402, 504).

10. The method (700) of any one of claims 1 to 9, wherein the energy (205) is laser energy (206, 316, 416).

11. The method (800) of claim 1, comprising removing the second component (238, 304, 404, 502) from the bonded assembly (218, 300, 400, 500), wherein the step of removing includes :
applying (802) ablative material (244, 312, 412) against the first component (222, 302, 402, 504) in the bonded assembly (218, 300, 400, 500); and
wherein (718) applying energy (206, 316, 416) at the plurality of locations (212) along the bond (230, 308, 408) comprises sending (804) laser energy (206, 316, 416) into the ablative material (244, 312, 412) at the plurality of locations (212) to generate wave propagation (253) in the bonded assembly (218, 300, 400, 500).

12. The method (800) of claim 11 further comprising:
applying (806) a high impedance material (256) to the first component (222, 302, 402, 504) prior to applying the laser energy (206, 316, 416) to the ablative material (244, 312, 412) such that waves (251, 318, 418) from sending the laser energy (206, 316, 416) into the ablative material (244, 312, 412) are maintained in the bonded assembly (218, 300, 400, 500).

13. The method (800) of claim 11 or 12, wherein (808) sending the laser energy (206, 316, 416) into the ablative material (244, 312, 412) comprises applying the laser energy (206, 316, 416) having an intensity (208) sufficient to locally break the bond (230, 308, 408).

14. The method (800) of any one of claims 11 to 13, wherein (810) sending the laser energy (206, 316, 416) into the ablative material (244, 312, 412) comprises applying the laser energy (206, 316, 416) repeatedly at each location (214) of the plurality of locations (212).

15. The method (600, 700, 800) of any one of claims 1 to 14, wherein the bonded assembly (218, 300, 400, 500) comprises a portion of an aircraft (100), preferably wherein said portion includes a canopy (114) of aircraft (100) in which a supporting structure is defined by said first component (402) and a transparency of the canopy is defined by said second component (404).
